Europäisches Patentamt

European Patent Office

Office européen des brevets

(11) Veröffentlichungsnummer: **0 290 898 B1**

(12) **EUROPÄISCHE PATENTSCHRIFT**

(45) Veröffentlichungstag der Patentschrift: **29.01.92**

(51) Int. Cl.⁵: **B23K 20/22**, B23K 20/02, B23K 20/24

(21) Anmeldenummer: **88106994.2**

(22) Anmeldetag: **02.05.88**

(54) Verfahren zur Herstellung eines Werkstücks beliebiger Ouerschnittsabmessungen aus einer oxyddispersionsgehärteten Nickelbasis-Superlegierung mit gerichteten groben Stengelkristallen.

(30) Priorität: **13.05.87 CH 1839/87**

(43) Veröffentlichungstag der Anmeldung:
**17.11.88 Patentblatt 88/46**

(45) Bekanntmachung des Hinweises auf die
Patenterteilung:
**29.01.92 Patentblatt 92/05**

(84) Benannte Vertragsstaaten:
**CH DE FR GB IT LI**

(56) Entgegenhaltungen:
**EP-A- 0 090 887**
**EP-A- 0 171 230**
**EP-A- 0 192 105**
**EP-A- 0 205 859**

**SAE TRANSACTIONS, Band 73, 1965, Seiten 537-548; W.A. OWCZARSKI: "Diffusion welding"**

**WELDING JOURNAL, WELDING RESEARCH SUPPLEMENT, Band 51, Nr. 2, Februar 1972, Seiten 81-s - 89-s, Miami, Florida, US; K.H. HOLKO et al.: "Enhanced diffusion welding of TD-NiCr sheet"**

(73) Patentinhaber: **BBC Brown Boveri AG**
**Haselstrasse**
**CH-5401 Baden(CH)**

(72) Erfinder: **Verpoort, Clemens, Dr.**
**Bollstrasse 45**
**CH-5442 Fislisbach(CH)**

**Beschreibung**

Technisches Gebiet

Oxyddispersionsgehärtete Superlegierungen auf der Basis von Nickel, welche dank ihrer hervorragenden mechanischen Eigenschaften bei hohen Temperaturen beim Bau thermisch und mechanisch hochbeanspruchter Bauteile für thermische Maschinen Verwendung finden. Bevorzugtes Gebiet: Schaufelwerkstoffe für Gasturbinen.

Die Erfindung bezieht sich auf die Weiterentwicklung und Erweiterung des Verwendungsbereichs schwerumformbarer, vergleichsweise spröder oxyddispersionsgehärteter Superlegierungen höchster Warmfestigkeit, welche als monolithisches Vormaterial mit gerichteter grobkörniger Stengelstruktur der Kristallite primär nur in beschränkten Querschnittsabmessungen herstellbar sind.

Insbesondere betrifft sie ein Verfahren zur Herstellung eines Werkstücks beliebiger Querschnittsabmessungen aus einer oxyddispersionsgehärteten Nickelbasis-Superlegierung mit gerichteten groben, mit ihrer Längsachse senkrecht auf der Querschnittsfläche stehenden Stengelkristallen.

Stand der Technik

Oxyddispersionsgehärtete Superlegierungen auf Nickelbasis haben verlockende mechanische Hochtemperatureigenschaften und erlauben es, die Arbeitsmitteltemperaturen thermischer Maschinen gegenüber nichtdispersionsgehärteten Nickelbasis-Superlegierungen um weitere 100 bis 150 °C zu steigern. Dies ist im Sinne einer Erhöhung des Wirkungsgrades der Energieumsetzung höchst wünschenswert. Um jedoch diese Legierungen voll ausnutzen zu können, müssen die daraus gefertigten Werkstücke in grobkristallinem Zustand vorliegen. Für ein schaftartiges Bauteil mit ausgeprägter Längsachse bedeutet dies, dass der Werkstoff in Form von längsgerichteten Stengelkristallen vorliegen muss. Nur so lassen sich hohe Zeitstandfestigkeiten bei höchsten Einsatztemperaturen erzielen.

Oxyddispersionsgehärtete Superlegierungen werden durch mechanisches Legieren pulvermetallurgisch hergestellt. Das vorverdichtete Material wird in der Regel durch Strangpressen bis zum dichten, porenfreien Halbzeug verarbeitet. Wegen seiner hohen Warmfestigkeit sind die erhältlichen Stangenquerschnitte zufolge begrenzter Kräfte der Strangpressen auf bestimmte Masse beschränkt. Zur Erzielung längsgerichteter Stengelkristalle muss das Halbzeug einem Zonenglühprozess (gerichtete Rekristallisation) unterworfen werden. Dieser erfordert über den ganzen Querschnitt bestimmte Aufheiz- und Abkühlungsbedingungen. Aus thermodynamischen Gründen (Temperaturgradient) ist deshalb der Querschnitt des zu behandelnden Halbzeugs ebenfalls beschränkt. Die grössten, auf Grund der Wärmeleitfähigkeit des Werkstoffs erreichbaren rechteckigen Querschnitte belaufen sich auf ca. 35 mm x 110 mm. Im Handel ist zur Zeit ein prismatisches Halbzeug von 32 mm x 105 mm erhältlich. Demzufolge lassen sich zur Zeit oxyddispersionsgehärtete Superlegierungen nur für beschränkte Schaufelgrössen einsetzen.

Bei der Fertigung industrieller Gasturbinen grosser Leistung überschreiten die verlangten Schaufelabmessungen bereits die im Handel erhältlichen und technisch ausführbaren Querschnitte von Halbzeug aus oxyddispersionsgehärteten Legierungen. Deshalb scheidet zur Zeit eine Verwendung dieser Legierungen gerade dort aus, wo ihr Einsatz am vielversprechendsten wäre.

Es ist schon vorgeschlagen worden, Teile aus einer oxyddispersionsgehärteten Superlegierung im feinkörnigen Zustand durch Diffusions-Fügen zu grösseren Körpern zu verbinden und diese nachträglich durch Rekristallisationsglühen in den grobkörnigen Zustand überzuführen (vgl. US-A-3 758 741). Dieses Verfahren versagt jedoch beim Zonenglühen grosser Querschnitte. Die im Innern des Werkstücks liegenden Partien lassen sich mangels genügend hohen Temperaturgradienten nicht mehr zur Rekristallisation in grobkörnige Stengelkristalle zwingen. Dadurch sinkt die Zeitstandfestigkeit auf einen Bruchteil des optimalen Wertes herab. Das Werkstück ist für den beabsichtigten Zweck wertlos.

Warmverformen von Blechen aus schwer verformbaren grobkörnigen oxyddispersiongehärteten Werkstoffen durch heiss-isostatisches Pressen und alternative gleichzeitiges Diffusionsfügen von mehreren Blechen oder Blechenden ist bekannt (vgl. Z.B. EP-A-0 192 105). Dabei handelt es sich um beschränkte Querschnitte und Abmessusngen, bei denen die oben genannten Probleme in der Regel nicht auftreten. Da die betreffenden Fügezonen überdies in der Regel keinen hohen Beanspruchungen im Betrieb ausgesetzt sind, hat das eventuell gelegentliche Auftreten feinkörniger Zonen keinen gravierenden Einfluss auf die Funktionstüchtigkeit des Werkstücks.

Es besteht ein grosses Bedürfnis, den Verwendungsbereich oxyddispersionsgehärteter Werkstoffe beim Bau thermischer Maschinen zu erweitern. Der Konstrukteur sollte durch keinerlei Beschränkungen bezüglich Abmessungen der Werkstücke eingeengt sein, was angesichts der stets wachsenden Grösse der Maschi-

EP 0 290 898 B1

neneinheiten (Beispiel industrielle Gasturbinen) in Zukunft vermehrt ins Gewicht fallen wird.

Darstellung der Erfindung

Der Erfindung liegt die Aufgabe zugrunde, ein Verfahren zur Herstellung eines Werkstücks beliebiger Querschnittsabmessungen aus einer oxyddispersionsgehärteten Nickelbasis-Superlegierung mit gerichteten groben, mit ihrer Längsachse senkrecht auf der Querschnittsfläche stehenden Stengelkristallen anzugeben, welches bei grösstmöglicher Einfachheit ein über den ganzen Querschnitt gleichmässiges Korn und gute Reproduzierbarkeit gewährleistet. Dabei müssen auch geringfügige Zonen feinkörniger Kristallite in Zeilen- oder Perlkettenform mit absoluter Sicherheit vermieden werden.

Diese Aufgabe wird dadurch gelöst, dass im eingangs erwähnten Verfahren mindestens zwei aus besagtem Werkstoff bestehende, im zonengeglühten grobkristallinen Zustand vorliegende Werkstückteile an mindestens je einer die Längsachse der Stengelkristalle enthaltenden Seite durch Fräsen und Schleifen zur Herstellung von Fügeflächen mechanisch feinbearbeitet und anschliessend im Temperaturbereich von 50 bis 100 °C unterhalb der Rekristallisationstemperatur während 0,5 bis 6 h zur Beseitigung der während der mechanischen Bearbeitung durch Kaltverformung eingebrachten Spannungen und Gefügestörungen geglüht werden, dass ferner die Werkstückteile an den einander entsprechenden Fügeflächen aneinandergefügt und mittels heissisostatischem Pressen einem Diffusions-Fügeprozess unterworfen werden, dergestalt, dass die Werkstückteile zunächst unter einem Druck $p_K$ von höchstens 5 MPa auf 600 °C, dann mit einer Aufheizgeschwindigkeit von höchstens 2 °C/min mindestens auf eine kritische Temperatur $T_K$, oberhalb welcher keine Kaltverformung mehr eintritt, gebracht werden und anschliessend der Druck langsam mit einer Zunahme vn höchstens 1 MPa/min auf $p_{max}$ von 100 bis 300 MPa bei gleichzeitiger Erwärmung mit 2 °C/min bis auf eine Diffusionsfügetemperatur $T_D$ von 0 bis 50 °C unterhalb der Rekristallisationstemperatur gesteigert und dieser Zustand während 1 bis 24 h gehalten und das auf diese Weise gefügte Werkstück auf Raumtemperatur abgekühlt wird.

Weg zur Ausführung der Erfindung

Die Erfindung wird anhand der nachfolgenden, durch Figuren näher erläuterten Ausführungsbeispiele beschrieben.

Dabei zeigt:

Fig. 1      einen schematischen Schnitt (metallographisches Schliffbild mit der Gefügeausbildung) durch die Fügezone herkömmlich verbundener, nicht vorbehandelter Werkstückteile,

Fig. 2      einen schematischen Schnitt durch aufeinandergepresste Werkstückteile bei starker Vergrösserung,

Fig. 3      einen schematischen Schnitt (metallographisches Schliffbild mit der Gefügeausbildusng) durch die Fügezone herkömmlich verbundener Werkstückteile, deren kaltverformte Oberflächenschichten zuvor entfernt wurden,

Fig. 4      einen schematischen Schnitt (metallographisches Schliffbild mit der Gefügeausbildung) durch die Fügezone erfindungsgemäss verbundener Werkstückteile,

Fig. 5      ein Diagramm mit dem Verlauf der Temperatur T und des Druckes p in Funktion der Zeit t beim erfindungsgemässen Verbinden von Werkstückteilen durch heiss-isostatisches Pressen,

Fig. 6      eine schematische perspektivische Darstellung einer aus zwei gefügten Werkstückteilen hergestellten Turbinenschaufel,

Fig. 7      eine schematische perspektivische Darstellung des Kopfteils des Schaufelblattes einer aus zwei gefügten Werkstückteilen hergestellten Turbinenschaufel mit einem Kühlkanal,

Fig. 8      eine schematische perspektivische Darstellung des Kopfteils des Schaufelblattes einer aus zwei gefügten Werkstückteilen hergestellten Turbinenschaufel mit zwei Kühlkanälen.

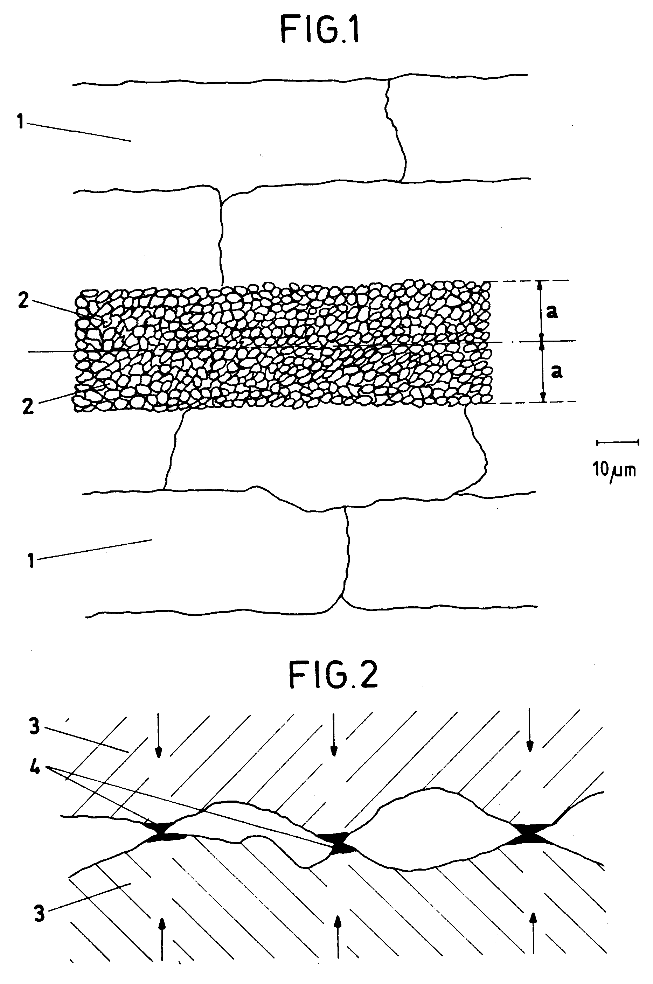

In Fig. 1 ist ein schematischer Schnitt in Form eines vereinfachten metallographischen Schliffbildes zur Sichtbarmachung der Gefügeausbildung durch die Fügezone von nicht vorbehandelten herkömmlich verbundenen Werkstückteilen dargestellt. Die Werkstückteile lagen ursprünglich im zonengeglühten Zustand vor und zeigen die charakteristischen grobkörnigen längsgerichteten Stengelkristalle 1. In der Fügezone zeigen sich feinkörnige Kristallite 2, im allgemeinen von globulitischer Form, die durch die Rekristallisation der zuvor durch mechanische Bearbeitung kaltverformten Oberflächenzone (a) bei der nachfolgenden Erwärmung auf Fügetemperatur entstanden sind. Die durch Feinbearbeitung (Schleifen) verbleibende kaltverformte und rekristallisierte Oberflächenzone (a) hat im allgemeinen eine einseitige Tiefe von ca. 10 bis 20 $\mu$m. Dies ist durch den Massstab 10 $\mu$m in der Zeichnung veranschaulicht.

Derartig konventionell gefügte Werkstücke zeigen im Betrieb bei hohen Temperaturen nur einen

3

Bruchteil der Warmfestigkeit (insbesondere der Kriechgrenze) des ursprünglichen nichtgefügten Werkstoffs. Für die Verwendung in hochbeanspruchten thermischen Maschinen sind derartige Bauteile unbrauchbar.

Fig. 2 zeigt in starker Vergrösserung einen schematischen Schnitt durch zwei aufeinandergepresste Werkstückteile. Zufolge der Unvollkommenheiten selbst nach bester Bearbeitung (Schleifen, Polieren, Aetzen etc.) verbleibt eine von einer mathematischen Ebene beträchtlich abweichende, die charakterisierende Oberflächenrauhigkeit zeigende Oberfläche. 3 sind die zu verbindenden Werkstückteile beim Aufeinanderpressen. Die dabei angewendeten Druckkräfte sind durch vertikale, gegeneinander gerichtete Pfeile angedeutet. Die Berührung findet nur an wenigen, willkürlich über die Oberflächen verteilten Punkten statt. Diese Berührungspunkte 4 werden beim Aufeinanderpressen kaltverformt. Diese örtliche Kaltverformung lässt sich durch keine Massnahme vermeiden.

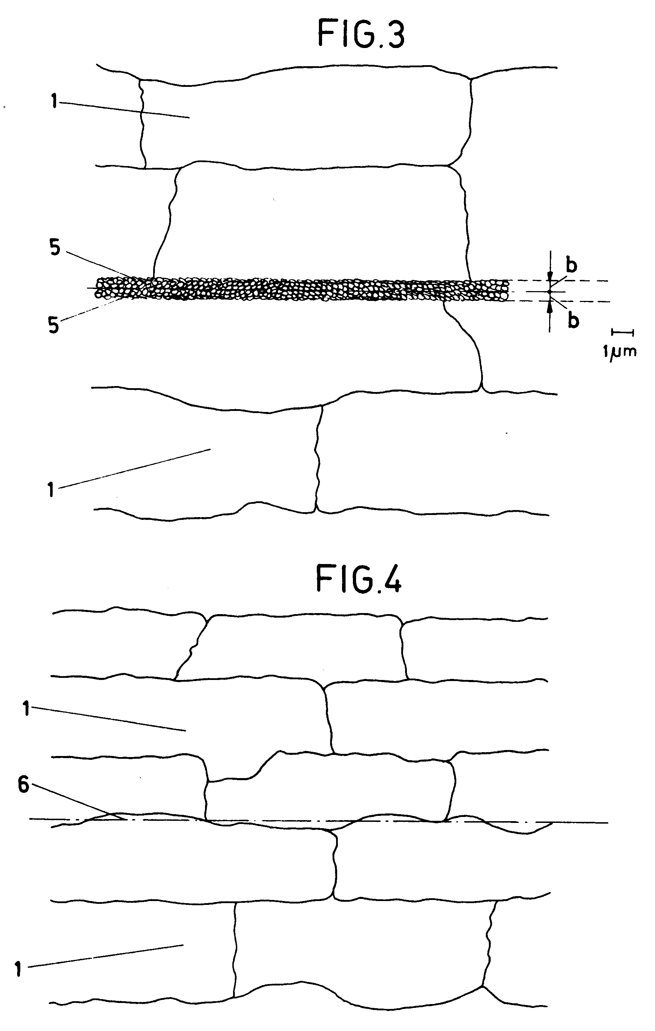

Fig. 3 stellt einen schematischen Schnitt (metallographisches Schliffbild mit Charakterisierung der Gefügeausbildung) durch die Fügezone von herkömmlich verbundenen Werkstückteilen dar, deren kaltverformte Oberflächenschichten zuvor entfernt wurden (Gegensatz zu Fig. 1). 1 sind die Stengelkristalle des Materials im Anlieferungszustand. 5 sind die feinkörnigen Kristallite der beim Aufeinanderpressen kaltverformten, rekristallisierten Oberflächenzone (b) eines Werkstückteils. Die durch mechanische Bearbeitung zuvor kaltverformten Oberflächenzonen waren durch geeignete Mittel (Aetzen, Elektroerosion etc.) vollständig entfernt worden. Bezugnehmend auf Fig. 2 stellt sich trotzdem eine - allerdings schmälere - feinkörnige Oberflächenzone (b) ein, die erst im Verlauf des Verbindungsprozesses gebildet wird. Im allgemeinen hat diese Oberflächenzone (b) eine einseitige Tiefe von ca. 0,5 bis 2 $\mu$m, was durch den Massstab 1 $\mu$m in der Zeichnung angedeutet ist. Diese Zone genügt indessen, um die Hochtemperaturfestigkeit eines Bauteils bis zur Unbrauchbarkeit im Betrieb abfallen zu lassen.

In Fig. 4 ist ein schematischer Schnitt in Form eines vereinfachten metallographischen Schliffbildes zur Sichtbarmachung der Gefügeausbildung durch die Fügezone von erfindungsgemäss vorbehandelten und entsprechend verbundenen Werkstückteilen dargestellt. Die im Anlieferungszustand vorliegenden grobkörnigen, längsgerichteten Stengelkristalle 1 eines jeden Werkstückteils sind auch nach dem Fügen unverändert erhalten geblieben und gehen "nahtlos" ineinander über. Es existiert keine feinkörnige Zwischenzone. 6 stellt lediglich die gedachte, theoretische geometrische Fügefläche unter Vermeidung der Feinkorn-Rekristallisation dar. Ein derartig gefügtes Werkstück verhält sich vollständig monolithisch, als ob es von Ursprung her bereits die angestrebten Endabmessungen gehabt hätte.

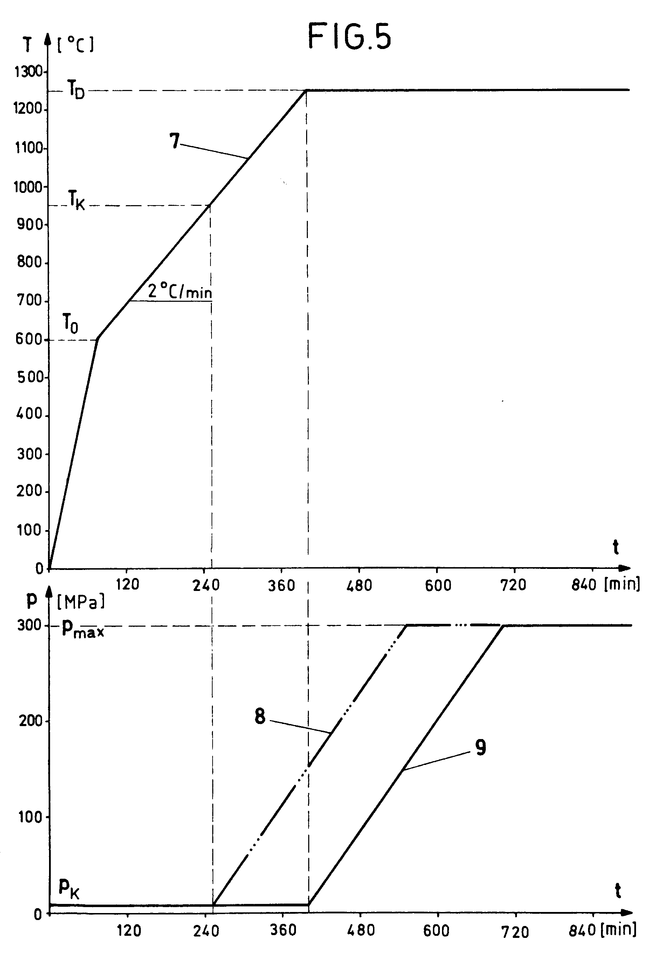

Fig. 5 zeigt ein Diagramm mit dem Verlauf der Temperatur T und des Druckes p in Funktion der Zeit t beim erfindungsgemässen Verbinden von Werkstückteilen durch heiss-isostatisches Pressen. Die Abszisse ist die jeweilige Zeitachse t in min. Die Ordinaten zeigen oben die Temperaturachse T in $^{\circ}$C für die zu verbindenden Werkstückteile, während unten die Druckachse p in MPa für den im Behälter herrschenden isostatischen Druck dargestellt ist. Die Kurve 7 bezieht sich auf den Temperaturverlauf. Die Werkstückteile dürfen zunächst vergleichsweise rasch auf eine Temperatur $T_o$ von ca. 600 $^{\circ}$C erwärmt werden. Die Weitererwärmung erfolgt langsam - mit nicht mehr als 2 $^{\circ}$C/min -, damit sich Spannungen ausgleichen und sich Kristallerholung in der Berührungszone der Werkstückteile einstellen kann, ohne dass es zur Rekristallisation kommt. Die kritische Temperatur $T_K$, bis zu welcher mindestens erwärmt werden muss, um beim darauffolgenden Aufeinanderpressen der Werkstückteile in den Oberflächenzonen kein Kaltverformung mehr befürchten zu müssen, liegt bei ca. 950 $^{\circ}$C und ist gestrichelt eingezeichnet. Die Erwärmung erfolgt weiter mit nicht mehr als 2 $^{\circ}$C/min bis zur eingezeichneten Diffusionsfügetemperatur $T_D$, auf welcher die zu verbindenden Teile so lange gehalten werden (je nach Grösse, Form und Legierung 1 bis 24 h), bis die sich berührenden groben Kristalle ohne Rekristallisation (ohne sichtbare Naht) vollständig zusammengewachsen sind. Die Diffusionsfügetemperatur $T_D$ liegt bei diesem Verbindungsverfahren im Bereich von 0 bis 50 $^{\circ}$C unterhalb der Rekristallisationstemperatur des betreffenden Werkstoffs, im vorliegenden Fall bei ca. 1200 $^{\circ}$C. Der Druck $p_K$, mit welchem die Werkstückteile zunächst im kalten Zustand aneinandergefügt werden (im vorliegenden Fall höchstens 5 MPa) darf erst nach Erreichen der Temperatur $T_K$ langsam auf den eingezeichneten Wert $p_{max}$ (Diffusionsfügedruck) gesteigert werden: Kurve 8! Im Zweifelsfalle - bei Unkenntnis der kritischen Temperatur $T_K$ - können die Werkstückteile auch zuerst auf die Diffusionsfügetemperatur $T_D$ erhitzt werden, bevor mit dem Druckanstieg begonnen wird: Kurve 9! Alle praktischen Möglichkeiten des Verfahrens liegen demgemäss in den Grenzen zwischen den Kurven 8 und 9.

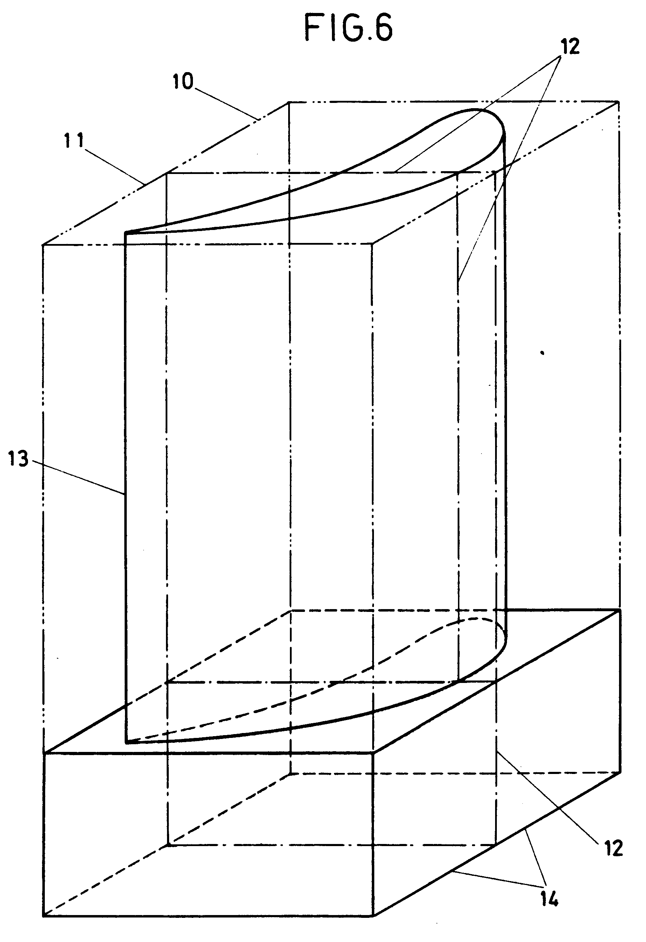

In Fig. 6 ist eine aus zwei gefügten Werkstückteilen hergestellte Turbinenschaufel schematisch perspektivisch dargestellt. 10 ist ein prismatisches Werkstückteil I, 11 ein ebensolches Werkstückteil II. Vorteilhafterweise stammen beide Teile aus dem gleichen Stangenmaterial und haben somit - wie im gezeichneten Fall - gleiche Abmessungen. 12 ist die Fügefläche zwischen Werkstückteil I und Werkstückteil II, im vorliegenden Fall eine Ebene parallel zu einer Seitenfläche. 13 ist das Schaufelblatt, 14 der Schaufelfuss. Die Fügefläche 12 ist so gelegt, dass sie ungefähr mit der quer durch die dickste Stelle des Tragflügel-Schaufelprofils in Richtung der höchsten im Betrieb auftretenden Biegebeanspruchung gelegten Ebene zusammenfällt.

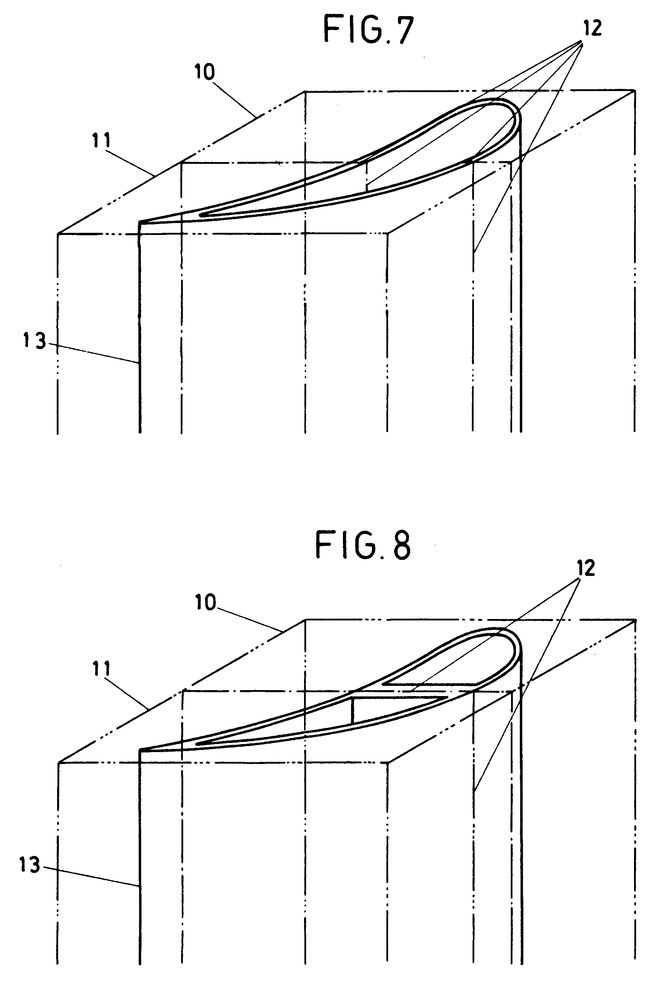

Fig. 7 zeigt eine schematische perspektivische Darstellung des Kopfteils des Schaufelblattes einer aus zwei gefügten Werkstückteilen hergestellten Turbinenschaufel mit einem Kühlkanal in der Längsrichtung (Schaufellängsachse). Die Figur bedarf nicht weiterer Erläuterungen. Das Prinzip der Lage der Fügefläche 12 ist das gleiche wie unter Fig. 6, die Bezugszeichen sind ebenfalls die gleichen.

Fig. 8 zeigt eine schematische perspektivische Darstellung des Kopfteils des Schaufelblattes einer aus zwei gefügten Werkstückteilen hergestellten Turbinenschaufel mit zwei Kühlkanälen. Die Fügefläche 12 ist hier in die Mitte des Steges gelegt, der die beiden Kühlkanäle trennt. Im übrigen gilt das unter Fig. 7 Gesagte.

Ausführungsbeispiel 1:

Als Ausgangsmaterial lag eine oxyddispersionsgehärtete Nickelbasis-Superlegierung in Form von prismatischem Halbzeug mit einem rechteckigen Querschnitt von 70 mm Breite und 32 mm Dicke vor. Der Werkstoff trug den Handelsnamen MA 6000 von INCO und hatte folgende Zusammensetzung:

$$
\begin{array}{lll}
Cr & = & 15,0 \quad Gew.-\% \\
Al & = & 4,5 \quad Gew.-\% \\
Ti & = & 2,5 \quad Gew.-\% \\
Mo & = & 2,0 \quad Gew.-\% \\
W & = & 4,0 \quad Gew.-\% \\
Ta & = & 2,0 \quad Gew.-\% \\
Zr & = & 0,15 \quad Gew.-\% \\
B & = & 0,01 \quad Gew.-\% \\
C & = & 0,05 \quad Gew.-\% \\
Y_2O_3 & = & 1,1 \quad Gew.-\% \\
Ni & = & Rest
\end{array}
$$

Im Anlieferungszustand bestand der Werkstoff aus durch Zonenglühen und Rekristallisation gezielt eingestellten grobkörnigen, längsgerichteten Stengelkristallen von durchschnittlich 20 mm Länge, 5 mm Breite und 3 mm Dicke. Von diesem Halbzeug wurden Prismen von je ca. 170 mm Länge abgeschnitten und je eine Breitseite (70 mm) durch mechanische Bearbeitung (Feinschleifen) möglichst eben hergerichtet. Die verbleibende Oberflächenrauhigkeit betrug noch ca. 3 $\mu$m.

Die Rekristallisationstemperatur des Werkstoffs MA 6000 liegt bei ca. 1200 $^\circ$C. Die beiden bearbeiteten prismatischen Werkstückteile wurden nun zwecks Beseitigung der durch Oberflächenbearbeitung zufolge Kaltverformung eingebrachten Spannungen und Gefügestörungen bei einer Temperatur von 1190 $^\circ$C während 3 h unter Schutzgas geglüht und langsam abgekühlt. Nun wurden die zu verbindenden Werkstückteile mit ihren bearbeiteten Oberflächen aneinandergefügt und in eine dünnwandige prismatische Kapsel entsprechender Abmessungen aus weichem Stahl eingeschoben. Die Innenabmessungen der Kapsel waren derart, dass die Werkstückteile gerade stramm hineinpassten. Nun wurde die Kapsel stirnseitig abgeschlossen, evakuiert und danach vakuumdicht und gasdicht verschweisst. Die derart eingekapselten Werkstückteile wurden nun in eine Vorrichtung zum heiss-isostatischen Pressen gebracht und zunächst einem leichten allseitigen Druck $p_o$ von 3 MPa ausgesetzt und innerhalb ca. 1 h auf eine Temperatur von ca. 600 $^\circ$C erwärmt. Dann erfolgte ein langsameres Aufheizen mit einer Aufheizgeschwindigkeit von ca. 2 $^\circ$C/min bis auf eine Temperatur $T_D$ von 1180 $^\circ$C, welche während einer Zeitdauer von 10 h gehalten wurde. Beim Erreichen einer Temperatur von $T_K$ von 950 $^\circ$C wurde der Druck über eine Zeitdauer von ca. 4 h hin allmählich und gleichmässig auf einen Wert $p_{max}$ von 250 MPa gesteigert. Dieser Druck wurde dann bis zum Ende des heiss-isostatischen Pressens (Diffusionsfügeprozess) konstant gehalten. Dann wurde das gefügte Werkstück langsam abgekühlt und einer Prüfung unterzogen. Die Abmessungen betrugen nun:

5

```
Breite      =     70   mm
Dicke       =     63,5 mm
Länge       =    170   mm
```

Es wurden Längs- und Querproben gefertigt und die mechanischen Festigkeitswerte bei Raumtemperatur und bei 1000 °C gemessen und mit denjenigen des Ausgangsmaterials verglichen. Dabei wurde der Zeitstandfestigkeit bei erhöhter Temperatur besondere Beachtung geschenkt. Es konnte dabei am fertigen Werkstück keinerlei Festigkeitsabfall festgestellt werden.

Ausführungsbeispiel 2:

Aus dem Werkstoff MA 6000 (INCO) wurde genau gemäss Beispiel 1 ein Werkstück mit den gleichen Abmessungen gefügt. Aus diesem Werkstück wurde eine Gasturbinenschaufel ähnlich Fig. 6 herausgearbeitet. Die Fügefläche 12 lag dabei in dickeren Teil des Schaufelblattes 13 und verlief ungefähr senkrecht zum Tragflügelprofil. Die Schaufel wies im Gegensatz zu Fig. 6 einen schmalen Tannenbaumfluss auf und besass am Kopfende eine Deckplatte. Die totale Länge der Schaufel inkl. Fuss betrug 160 mm. Das Schaufelblatt 13 mit Tragflügelprofil hatte folgende Abmessungen:

```
Totale Länge    =    120 mm
Grösste Breite  =     50 mm
Grösste Dicke   =     13 mm
Profilhöhe      =     15 mm
```

Die Schaufel wurde harten Prüfbedingungen ausgesetzt. Unter anderem wurden Thermoschockversuche zwischen 200 °C und 950 °C durchgeführt. Es konnten auch nach 400 Temperaturzyklen keine Risse festgestellt werden.

Ausführungsbeispiel 3:

Aus dem Werkstoff MA 6000 (Zusammensetzung siehe Beispiel 1) wurde ein Werkstück aus zwei prismatischen Körpern mit quadratischem Querschnitt von 58 mm Seitenlänge gefügt. Das gefügte Werkstück hatte eine totale Länge von 190 mm. Im übrigen wurde der Herstellungsprozess gemäss Beispiel 1 abgewickelt. Aus dem gefügten Werkstück mit den Abmessungen

```
Breite      =    115,5 mm
Dicke       =     58   mm
Länge       =    190   mm
```

wurde eine Laufschaufel für eine Gasturbine mit Tannenbaumfuss und Deckplatte gefertigt. Die Fügefläche 12 (vgl. Fig. 6) verlief quer zum Tragflügelprofil des Schaufelblattes 13. Letzteres hatte folgende Abmessungen:

```
Totale Länge    =    140 mm
Grösste Breite  =     75 mm
Grösste Dicke   =     22 mm
Profilhöhe      =     25 mm
```

6

Die Schaufel wurde in eine Gasturbine eingebaut und einigen Hundert Zyklen Wechsellast (inkl. Lastabwürfe) ausgesetzt. Nach 5000 Betriebsstunden konnten keinerlei Schäden (Haarrisse) festgestellt werden. Die Schaufel wurde ausgebaut und ihre Warmfestigkeit bestimmt. Sie lag durchaus im Rahmen des Toleranzbandes des Halbzeugs (Stangenmaterial) im Anlieferungszustand.

Ausführungsbeispiel 4:

Als Ausgangsmaterial lag eine oxyddispersionsgehärtete Nickelbasis-Superlegierung in Form von prismatischem Halbzeug mit einem rechteckigen Querschnitt von 95 mm Breite und 30 mm Dicke vor. Der Werkstoff hatte folgende Zusammensetzung:

```
Cr      =    20,0    Gew.-%
Al      =     6,0    Gew.-%
Mo      =     2,0    Gew.-%
W       =     3,5    Gew.-%
Zr      =     0,19   Gew.-%
B       =     0,01   Gew.-%
C       =     0,01   Gew.-%
Y2O3    =     1,1    Gew.-%
Ni      =    Rest
```

Der Werkstoff lag im zonengeglühten rekristallisierten grobkörnigen Zustand vor. Die längsgerichteten Stengelkristalle hatten durchschnittlich eine Länge von 18 mm, eine Breite von 6 mm und eine Dicke von 2,5 mm. Von diesem Halbzeug wurden drei Prismen von je ca. 220 mm Länge abgeschnitten und an einem Prisma die beiden Breitseiten (95 mm), an den übrigen zwei je eine Breitseite (95 mm) durch Feinschleifen eben bearbeitet. Die Oberflächenrauhigkeit betrug noch ca. 4 $\mu$m.

Die Rekristallisationstemperatur dieses Werkstoffs liegt bei ca. 1200 °C. Die drei prismatischen Werkstückteile wurden nun während 4 h unter Schutzgas einer Glühbehandlung bei einer Temperatur von 1120 °C unterworfen und daraufhin langsam abgekühlt. Dabei wurde die Triebkraft, welche durch die Kaltverformung beim Schleifen in die Oberflächenzonen eingebracht worden war, beseitigt. Die drei Werktückteile wurden nun mit ihren bearbeiteten Oberflächen (Breitseite auf Breitseite) aufeinandergelegt und das auf diese Weise gebildete Paket in eine prismatische Kapsel eingeschoben, deren Innenabmessungen knapp oberhalb der Abmessungen des Paketes lagen. Die Kapsel hatte eine Wandstärke von 2,5 mm und bestand aus einem niedriggekohlten weichen Kohlenstoffstahl. Danach wurde die Kapsel stirnseitig verschlossen, evakuiert und gas- und vakuumdicht verschweisst. Das Ganze wurde nun einem Diffusionsfügeprozess durch heiss-isostatisches Pressen unterworfen. Die eingekapselten drei Werkstücke wurden zunächst einem allseitigen Druck $p_K$ von 5 MPa ausgesetzt, innerhalb von 1 1/2 h auf eine Temperatur von ca. 600 °C und anschliessend mit einer Aufheizgeschwindigkeit von 1,5 °C/min auf eine Temperatur $T_D$ von 1160 °C erhitzt. Letzteres wurde während insgesamt 12 h gehalten. Nach Erreichen der Temperatur $T_D$ wurde der Druck mit einer Steigung von 1 MPa/min auf den Endwert des heiss-isostatischen Pressens $p_{max}$ von 300 MPa gebracht und konstant gehalten. Nach langsamer Abkühlung des auf diese Weise diffusionsgefügten Werkstücks auf Raumtemperatur stellten sich seine Masse wie folgt:

```
Breite      =       95  mm
Dicke       =       89  mm
Länge       =      220  mm
```

Aus diesem Werkstück wurde eine Gasturbinen-Leitschaufel ähnlich Fig. 6 herausgearbeitet. Das Schaufelblatt 13 wurde ähnlich Fig. 7 mit einem in der Längsachse liegenden Kühlkanal versehen. Bei der Bearbeitung wurde das Werkstück so ausgerichtet, dass die Fügeflächen 12 quer zum Tragflügelprofil zu liegen kamen. Das Schaufelblatt hatte die nachfolgenden Abmessungen:

```
Totale Länge      =    130    mm
Grösste Breite    =     80    mm
Grösste Dicke     =     22    mm
Profilhöhe        =     26    mm
Mittlere
Wandstärke        =      3,5  mm
```

Die ganze Schaufel inklusive Fuss und Deckplatte hatte eine totale Länge von 210 mm. Die Deckplatte hatte folgende Abmessungen:

```
Länge (in axialer Richtung der Turbine)         =    66 mm
Breite (in tangentialer Richtung der Turbine)   =    60 mm
Höhe (in radialer Richtung der Turbine)         =     8 mm
```

Der Schaufelfuss hatte folgende Abmessungen:

```
Länge (axial)        =  80 mm
Breite (tangential)  =  72 mm
Höhe (radial)        =  80 mm
```

Die Schaufel wurde gemäss Beispiel 2 Thermoschockversuchen unterworfen, welche keinerlei Anrisse zeitigten.

Ausführungsbeispiel 5:

Als Ausgangsmaterial lag eine oxydispersionsgehärtete Nickelbasis-Superlegierung in Form von prismatischem Halbzeug mit einem rechteckigen Querschnitt von 95 mm Breite und 32 mm Dicke vor. Das Werkstück hatte folgende Zusammensetzung:

$$
\begin{array}{lll}
Cr & = & 17,0 \quad \text{Gew.-\%} \\
Al & = & 6,0 \quad \text{Gew.-\%} \\
Mo & = & 2,0 \quad \text{Gew.-\%} \\
W & = & 3,5 \quad \text{Gew.-\%} \\
Ta & = & 2,0 \quad \text{Gew.-\%} \\
Zr & = & 0,15 \quad \text{Gew.-\%} \\
B & = & 0,01 \quad \text{Gew.-\%} \\
C & = & 0,05 \quad \text{Gew.-\%} \\
Y_2O_3 & = & 1,1 \quad \text{Gew.-\%} \\
Ni & = & \text{Rest}
\end{array}
$$

Das Halbzeug lag im zonengeglühten rekristallisierten grobkörnigen Zustand vor. Die längsgerichteten Stengelkristalle hatten im Mittel eine Länge von 16 mm, eine Breite von 5 mm und eine Dicke von 3 mm. Vom Halbzeug wurden drei Prismen von je ca. 240 mm Länge abgeschnitten und an einem Prisma die beiden Breitseiten (95 mm), an den übrigen zwei je eine Breitseite (95 mm) exakt eben geschliffen. Die Oberflächenrauhigkeit betrug ca. 3,5 $\mu$m.

Die Rekristallisationstemperatur dieses Werkstoffs liegt bei etwa 1200 °C. Im Folgenden wurde ähnlich wie unter Beispiel 4 angegeben vorgegangen. Die Glühbehandlung wurde bei 1150 °C während 3 h vorgenommen. Die eingekapselten drei Werkstückteile wurden einem allseitigen Druck $p_K$ von 4 MPa ausgesetzt. Nachdem das Werkstück ab 600 °C mit einer Aufheizgeschwindigkeit von 2 °C/min auf ca. 1100 °C erhitzt worden war, wurde mit der Erhöhung des Druckes mit einer Steigerung von ca. 0,8 MPa/min begonnen. Die Temperatur $T_D$ des Diffusions-Fügens betrug ca. 1190 °C und wurde während 24 h gehalten. Der dabei aufgewendete Druck $p_{max}$ betrug 280 MPa und wurde während des ganzen Pressens konstant gehalten. Die Masse dieses gefügten Werkstücks waren folgende:

$$
\begin{array}{lll}
Breite & = & 95 \text{ mm} \\
Dicke & = & 95 \text{ mm} \\
Länge & = & 240 \text{ mm}
\end{array}
$$

Aus diesem Werkstück wurde eine Gasturbinen-Leitschaufel ähnlich Fig. 6 herausgearbeitet. Das Schaufelblatt 13 wurde ähnlich Fig. 8 mit zwei in der Längsachse liegenden Kühlkanälen versehen. Dabei wurde das Werkstück so ausgerichtet, dass die Fügeflächen 12 annähernd quer zum Tragflügelprofil zu liegen kamen. Ausserdem lag die eine der Fügeflächen 12 in der Mitte des Steges, welcher die beiden Kühlkanäle trennte. Das Schaufelblatt hatte die nachfolgenden Abmessungen:

$$
\begin{array}{lll}
\text{Totale Länge} & = & 150 \text{ mm} \\
\text{Grösste Breite} & = & 82 \text{ mm} \\
\text{Grösste Dicke} & = & 23 \text{ mm} \\
\text{Profilhöhe} & = & 28 \text{ mm} \\
\text{Mittlere} & & \\
\text{Wandstärke} & = & 4 \text{ mm}
\end{array}
$$

Die ganze Schaufel inklusive Fuss und Deckplatte hatte eine totale Länge von 230 mm. Die Deckplatte hatte folgende Abmessungen:

```
Länge (in axialer Richtung der Turbine)        =    68 mm

Breite (in tangentialer Richtung der Turbine) =    62 mm

Höhe (in radialer Richtung der Turbine)        =    10 mm
```

Der Schaufelfuss hatte folgende Abmessungen:

```
Länge (axial)      =    82 mm

Breite (tangential) =    75 mm

Höhe (radial)      =    85 mm
```

Die Schaufel wurde in eine Gasturbine eingebaut und strengen Wechsellastbedingungen ausgesetzt. Nach 3000 Betriebsstunden konnten keinerlei Oberflächenschäden festgestellt werden. Die ausgebaute Schaufel wurde zerlegt und einer Werkstoffprüfung unterworfen. Die gemessenen Werte für Festigkeit, Dehnung, Zähigkeit etc. entsprachen denjenigen des für die Diffusions-Fügung verwendeten Ausgangsmaterials im Anlieferungszustand.

Die Erfindung ist nicht auf die Ausführungsbeispiele beschränkt. Nach dem beschriebenen Verfahren können grundsätzlich alle oxyddispersionsgehärteten, in Form grobkörniger, längsgerichteter Stengelkristalle vorliegenden Hochtemperaturlegierungen, die als Ausgangsmaterial nur mit beschränkten Abmessungen lieferbar sind, zu beliebig grossen Werkstücken durch Diffusions-Fügen verbunden werden. Dies bezieht sich vor allem auf Superlegierungen auf Nickel-, Kobalt- und Eisenbasis. Das Hauptanwendungsgebiet liegt bei der Fertigung von grossen Bauteilen für hochbeanspruchte thermische Maschinen (Turbinenschaufeln).

Es ist darauf zu achten, dass vor dem Diffusionsfügen jegliche Folgen der Oberflächenbearbeitung (durch Kaltverformung eingebrachte Treibkraft) durch eine geeignete Massnahme (Wärmebehandlung, Aetzen, Elektropolieren etc.) beseitigt werden. Dies kann durch ein 0,5 bis 6 h dauerndes Glühen im Temperaturbereich von 50 bis 100 °C unterhalb der Rekristallisationstemperatur des Werkstoffs geschehen. Die nach Erreichen der Temperatur $T_K$ (oberhalb welcher keine Kaltverformung mehr eintritt) durchzuführende Drucksteigerung sollte langsam, d.h. mit einer Zunahme von höchstens 1 MPa/min erfolgen. Der maximal anzuwendende Diffusionsfügedruck $p_{max}$ beträgt - je nach Werkstoff, Werkstückgrösse und Zeitdauer - 100 bis 300 MPa und wird während 1 bis 24 h gehalten. In gewissen Fällen empfiehlt es sich aus Sicherheitsgründen, mit der Drucksteigerung erst nach Erreichen der Diffusionsfügetemperatur $T_D$ zu beginnen (siehe Kurve 9 in Fig. 5!).

**Patentansprüche**

1. Verfahren zur Herstellung eines Werkstücks beliebiger Querschnittsabmessungen aus einer oxyddispersionsgehärteten Nickelbasis-Superlegierung mit gerichteten groben, mit ihrer Längsachse senkrecht auf der Querschnittsfläche stehenden Stengelkristallen, dadurch gekennzeichnet, dass mindestens zwei aus besagtem Werkstoff bestehende, im zonengeglühten grobkristallinen Zustand vorliegende Werkstückteile an mindestens je einer die Längsachse der Stengelkristalle enthaltenden Seite durch Fräsen und Schleifen zur Herstellung von Fügeflächen mechanisch feinbearbeitet und anschliessend im Temperaturbereich von 50 bis 100 °C unterhalb der Rekristallisationstemperatur während 0,5 bis 6 h zur Beseitigung der während der mechanischen Bearbeitung durch Kaltverformung eingebrachten Spannungen und Gefügestörungen geglüht werden, dass ferner die Werkstückteile an den einander entsprechenden Fügeflächen aneinandergefügt und mittels heiss-isostatischem Pressen einem Diffusions-Fügeprozess unterworfen werden, dergestalt, dass die Werkstückteile zunächst unter einem Druck $p_K$ von höchstens 5 MPa auf 600 °C, dann mit einer Aufheizgeschwindigkeit von höchstens 2 °C/min mindestens auf eine kritische Temperatur $T_K$, oberhalb welcher keine Kaltverformung mehr eintritt, gebracht werden und anschliessend der Druck langsam mit einer Zunahme von höchstens 1 MPa/min auf $p_{max}$ von 100 bis 300 MPa bei gleichzeitiger Erwärmung mit 2 °C/min bis auf eine Diffusionsfügetemperatur $T_D$ von 0 bis 50 °C unterhalb der Rekristallisationstemperatur gesteigert und dieser Zustand während 1 bis 24 h gehalten und das auf diese Weise gefügte Werkstück auf Raumtemperatur abgekühlt wird.

2. Verfahren nach Anspruch 1, dadurch gekennzeichnet, dass die Werkstückteile ab 600 °C zunächst unter einem Druck von höchstens 5 MPa mit einer Aufheizgeschwindigkeit von höchstens 2 °C/min bis auf eine Temperatur von 0 bis 50 °C unterhalb der Rekristallisationstemperatur erwärmt und der Druck daraufhin langsam mit einer Zunahme von höchstens 1 MPa/min gesteigert wird.

3. Verfahren nach Anspruch 1, dadurch gekennzeichnet, dass die oxyddispersionsgehärtete Nickelbasis-Superlegierung die nachfolgende Zusammensetzung hat:

```
Cr      =    15,0   Gew.-%

Al      =     4,5   Gew.-%

Ti      =     2,5   Gew.-%

Mo      =     2,0   Gew.-%

W       =     4,0   Gew.-%

Ta      =     2,0   Gew.-%

Zr      =     0,15  Gew.-%

B       =     0,01  Gew.-%

C       =     0,05  Gew.-%

Y₂O₃    =     1,1   Gew.-%

Ni      =    Rest
```

und dass die Glühung zur Beseitigung der Folgen der Kaltverformung bei einer Temperatur von 1100 bis 1150 °C während 2 h und das heiss-isostatische Pressen bei einer Diffusionsfügetemperatur $T_D$ im Bereich von 1150 bis 1200 °C durchgeführt wird.

4. Verfahren nach Anspruch 1, dadurch gekennzeichnet, dass die oxyddispersionsgehärtete Nickelbasis-Superlegierung die nachfolgende Zusammensetzung hat:

```
Cr      =    20,0   Gew.-%

Al      =     6,0   Gew.-%

Mo      =     2,0   Gew.-%

W       =     3,5   Gew.-%

Zr      =     0,19  Gew.-%

B       =     0,01  Gew.-%

C       =     0,05  Gew.-%

Y₂O₃    =     1,1   Gew.-%

Ni      =    Rest
```

und dass die Glühung zur Beseitigung der Folgen der Kaltverformung bei einer Temperatur von 1100 bis 1150 °C während 2 h und dass heiss-isostatische Pressens bei einer Diffusionsfügetemperatur $T_D$ im Bereich von 1150 bis 1200 °C durchgeführt wird.

5. Verfahren nach Anspruch 1, dadurch gekennzeichnet, dass die oxyddispersionsgehärtete Nickelbasis-Superlegierung die nachfolgende Zusammensetzung hat:

```
Cr      =    17,0   Gew.-%
Al      =     6,0   Gew.-%
Mo      =     2,0   Gew.-%
W       =     3,5   Gew.-%
Ta      =     2,0   Gew.-%
Zr      =     0,15  Gew.-%
B       =     0,01  Gew.-%
C       =     0,05  Gew.-%
Y₂O₃    =     1,1   Gew.-%
Ni      =     Rest
```

und dass die Glühung zur Beseitigung der Folgen der Kaltverformung bei einer Temperatur von 1100 bis 1150 °C während 2 h und das heiss-isostatische Pressen bei einer Diffusionsfügetemperatur $T_D$ von 1150 bis 1200 °C durchgeführt wird.

6. Verfahren nach Anspruch 1, dadurch gekennzeichnet, dass das herzustellende Werkstück eine Schaufel für eine thermische Maschine ist, welche die Querschnittsabmessungen konventionell herstellbaren Halbzeugs überschreitet, und dass zunächst aus prismatischem Halbzeug durch mechanische Bearbeitung zwei in der Querrichtung, bezogen auf die Längsachse der Schaufel, sich ergänzende Werkstückteile derart herausgearbeitet werden, dass die Fügezone an die Stelle der grössten Profildicke des Schaufelblattes und ihre Ebene in Richtung der maximalen, im Betrieb zu erwartenden Biegekräfte zu liegen kommt.

7. Verfahren nach Anspruch 6, dadurch gekennzeichnet, dass das herzustellende Werkstück eine mit zwei längsgerichteten Kühlkanälen versehene Schaufel ist, und dass die beiden Werkstückteile, aus welchen die Schaufel zusammengefügt wird, derart aus Halbzeug herausgearbeitet werden, dass die Fügezone in die Mitte der längs verlaufenden Trennwand der Schaufel zu liegen kommt.

8. Verfahren nach Anspruch 5, dadurch gekennzeichnet, dass das herzustellende Werkstück eine mit einem längsgerichteten Kühlkanal versehene Schaufel ist, und dass die beiden Werkstückteile, aus welchen die Schaufel zusammengefügt wird, derart aus Halbzeug herausgearbeitet werden, dass die Fügezonen sich in einer Ebene befinden und an die Stellen der geringsten, im Betrieb zu erwartenden mechanischen Beanspruchungen des Hohlprofils des Schaufelblattes zu liegen kommen.

**Claims**

1. Method of manufacturing a workpiece of any given cross-sectional dimensions from an oxide-dispersion-hardened nickel-based superalloy with directional coarse columnar crystals set with their longitudinal axis at right angles to the cross-sectional area, characterised in that at least two workpiece parts consisting of the material quoted and available in the zone heat treated coarse crystalline condition are mechanically fine-machined by milling and grinding to produce bonding surfaces on at least one side of each containing the longitudinal axis of the columnar crystals and are subsequently heat-treated in the temperature range from 50 to 100 °C below the recrystallisation temperature for 0.5 to 6 h to remove the stresses and structural perturbations introduced by cold working during the machining, in that, further, the workpiece parts are joined together at the mutually corresponding bonding surfaces and are subjected to a diffusion bonding process by means of hot isostatic pressing in such a way that the workpiece parts are initially brought to 600 °C under a pressure $p_k$ of not more than 5 MPa and are then heat-treated at a heating rate of not more than 2 °C/min to at least a critical temperature $T_k$, above which no further cold working occurs and, subsequently, the pressure being slowly increased at a rate of not more than 1 MPa/min to a $p_{max}$ of 100 to 30 MPa with simultaneous heating at 2 °C/min up to a diffusion bonding temperature $T_D$ of 0 to 50 °C below the recrystallisation temperature and in that this condition is retained for 1 to 24 h and the workpiece bonded in this way is cooled to room temperature.

2. Method according to Claim 1, characterised in that the workpiece parts are heated from 600°C, initially under a pressure of not more than 5 MPa, at a heating rate of not more than 2°C/min to a temperature of 0 to 50°C below the recrystallisation temperature, the pressure being then increased slowly at a rate of increase of not more than 1 MPa/min.

3. Method according to Claim 1, characterised in that the oxide-dispersion-hardened nickel-based superalloy has the following composition:

```
Cr    =    15.0       % by weight
Al    =    4.5        % by weight
Ti    =    2.5        % by weight
Mo    =    2.0        % by weight
W     =    4.0        % by weight
Ta    =    2.0        % by weight
Zr    =    0.15       % by weight
B     =    0.01       % by weight
C     =    0.05       % by weight
Y2O3  =    1.1        % by weight
Ni    =    Rest
```

and in that the heat treatment to remove the consequences of the cold working is carried out at a temperature of 1100 to 1150°C for 2 h and the hot isostatic pressing is carried out at a diffusion bonding temperature $T_D$ in the range from 1150 to 1200°C.

4. Method according to Claim 1, characterised in that the oxide-dispersion-hardened nickel-based superalloy has the following composition:

```
Cr    =    20.0       % by weight
Al    =    6.0        % by weight
Mo    =    2.0        % by weight
W     =    3.5        % by weight
Zr    =    0.19       % by weight
B     =    0.01       % by weight
C     =    0.05       % by weight
Y2O3  =    1.1        % by weight
Ni    =    Rest
```

and in that the heat treatment to remove the consequences of the cold working is carried out at a temperature of 1100 to 1150°C for 2 h and the hot isostatic pressing is carried out at a diffusion bonding temperature $T_D$ in the range from 1150 to 1200°C.

5. Method according to Claim 1, characterised in that the oxide-dispersion-hardened nickel-based superalloy has the following composition:

| | | | |
|---|---|---|---|
| Cr | = | 17.0 | % by weight |
| Al | = | 6.0 | % by weight |
| Mo | = | 2.0 | % by weight |
| W | = | 3.5 | % by weight |
| Ta | = | 2.0 | % by weight |
| Zr | = | 0.15 | % by weight |
| B | = | 0.01 | % by weight |
| C | = | 0.05 | % by weight |
| $Y_2O_3$ | = | 1.1 | % by weight |
| Ni | = | Rest | |

and in that the heat treatment to remove the consequences of the cold working is carried out at a temperature of 1100 to 1150°C for 2 h and the hot isostatic pressing is carried out at a diffusion bonding temperature $T_D$ in the range from 1150 to 1200°C.

6. Method according to Claim 1, characterised in that the workpiece to be manufactured is thermal machine blading which exceeds the cross-sectional dimensions of a conventionally manufacturable semi-finished product, and in that two workpiece parts, mutually complementary in the transverse direction with respect to the longitudinal axis of the blade, are initially machined out of the prismatic semi-finished product in such a way that the bonding zone comes to be located at the position of the maximum profile thickness of the airfoil and its plane comes to be located in the direction of the maximum bending forces to be expected in operation.

7. Method according to Claim 6, characterised in that the workpiece to be manufactured is blading provided with two longitudinally directed cooling ducts and in that the two workpiece parts from which the blading is bonded together are machined out of the semi-finished product in such a way that the bonding zone comes to be located in the centre of the longitudinally extending partition of the blading.

8. Method according to Claim 5, characterised in that the workpiece to be manufactured is blading provided with a longitudinally directed cooling duct, and in that the two workpiece parts from which the blading is bonded together are machined out of the semi-finished product in such a way that the bonding zones are located in a plane and come to be located at the positions of the hollow profile of the airfoil where the mechanical loads to be expected in operation are a minimum.

**Revendications**

1. Procédé de fabrication d'une pièce ayant une section de dimensions quelconques en un superalliage à base de nickel durci par dispersion d'oxydes avec des cristaux basaltiques grossiers orientés avec leur axe longitudinal perpendiculaire au plan de la section, caractérisé en ce qu'au moins deux parties de pièce constituées dudit matériau, se trouvant dans l'état à gros grain recuit par zones, sont finement usinées mécaniquement, par fraisage ou rectification, chacune dans au moins une face contenant l'axe longitudinal des cristaux basaltiques pour réaliser des surfaces de liaison, et sont ensuite recuites dans un domaine de température de 50 à 100°C en dessous de la température de recristallisation pendant 0,5 à 6 h pour éliminer les contraintes et les perturbations de la structure induites par écrouissage pendant l'usinage mécanique, qu'en outre les parties de pièce sont assemblées l'une à l'autre par les surfaces de liaison correspondant l'une à l'autre et sont soumises à une opération d'assemblage par diffusion par pressage isostatique à chaud de telle sorte que les parties de pièce soient d'abord mises sous une pression $p_x$ de 5 MPa au maximum à 600°C, puis portées avec une vitesse de chauffage maximale de 2°C/min au moins jusqu'à une température critique $T_k$, au-dessus de laquelle il ne se produit plus d'écrouissage, et qu'ensuite la pression est augmentée lentement avec un accroissement

14

de 1 MPa/min au maximum jusqu'à une pression $p_{max}$ de 100 à 300 MPa avec un chauffage simultané à 2°C/min jusqu'à une température d'assemblage par diffusion $T_D$ de 0 à 50°C en dessous de la température de recristallisation et que cette situation est maintenue pendant 1 à 24 h et puis la pièce ainsi assemblée est refroidie jusqu'à la température ambiante.

2. Procédé suivant la revendication 1, caractérisé en ce que les parties de pièce sont d'abord chauffées, sous une pression de 5 MPa au maximum, depuis 600°C jusqu'à une température de 0 à 50°C en dessous de la température de recristallisation avec une vitesse de chauffage de 2°C/min au maximum, et en ce que la pression est ensuite augmentée lentement avec un accroissement de 1 MPa/min au maximum.

3. Procédé suivant la revendication 1, caractérisé en ce que le superalliage à base de nickel durci par dispersion d'oxydes présente la composition pondérale suivante:

$$
\begin{array}{lcl}
Cr & = & 15,0\ \% \\
Al & = & 4,5\ \% \\
Ti & = & 2,5\ \% \\
Mo & = & 2,0\ \% \\
W & = & 4,0\ \% \\
Ta & = & 2,0\ \% \\
Zr & = & 0,15\ \% \\
B & = & 0,01\ \% \\
C & = & 0\ 05\ \% \\
Y_2O_3 & = & 1,1\ \% \\
Ni & = & reste
\end{array}
$$

et en ce que le recuit est effectué à une température de 1100 à 1150°C pendant 2 h pour éliminer les conséquences de l'écrouissage et le pressage isostatique à chaud est effectué à une température d'assemblage par diffusion $T_D$ dans le domaine de 1150 à 1200°C.

4. Procédé suivant la revendication 1, caractérisé en ce que le superalliage à base de nickel durci par dispersion d'oxydes présente la composition pondérale suivante:

$$
\begin{array}{lcl}
Cr & = & 20,0\ \% \\
Al & = & 6,0\ \% \\
Mo & = & 2,0\ \% \\
W & = & 3,5\ \% \\
Zr & = & 0,19\ \% \\
B & = & 0,01\ \% \\
C & = & 0,01\ \% \\
Y_2O_3 & = & 1,1\ \% \\
Ni & = & reste
\end{array}
$$

et en ce que le recuit est effectué à une température de 1100 à 1150°C pendant 2 h pour éliminer les conséquences de l'écrouissage et le pressage isostatique à chaud est effectué à une température d'assemblage par diffusion $T_D$ dans le domaine de 1150 à 1200°C.

5. Procédé suivant la revendication 1, caractérisé en ce que le superalliage à base de nickel durci par dispersion d'oxydes présente la composition pondérale suivante:

$$
\begin{aligned}
Cr &= 17,0 \ \% \\
Al &= 6,0 \ \% \\
Mo &= 2,0 \ \% \\
W &= 3,5 \ \% \\
Ta &= 2,0 \ \% \\
Zr &= 0,15 \ \% \\
B &= 0,01 \ \% \\
C &= 0,05 \ \% \\
Y_2O_3 &= 1,1 \ \% \\
Ni &= reste
\end{aligned}
$$

et en ce que le recuit est effectué à une température de 1100 à 1150°C pendant 2 h pour éliminer les conséquences de l'écrouissage et le pressage isostatique à chaud est effectué à une température d'assemblage par diffusion $T_D$ dans le domaine de 1150 à 1200°C.

6. Procédé suivant la revendication 1, caractérisé en ce que la pièce à fabriquer est une aube pour une machine thermique, qui dépasse les dimensions d'un demi-produit réalisable conventionnellement, et en ce que d'abord, on tire hors d'un demi-produit prismatique, par usinage mécanique, deux parties de pièce se complétant en direction transversale, rapportée à l'axe longitudinal des cristaux basaltiques, de telle façon que la zone de liaison soit située à l'endroit de la plus forte épaisseur du profil de la lame de l'aube et que son plan se trouve dans la direction de la sollicitation de flexion maximale à laquelle on peut s'attendre en service

7. Procédé suivant la revendication 6, caractérisé en ce que la pièce à fabriquer est une aube pourvue de deux canaux di refroidissement longitudinaux, et en ce que les deux parties de pièce, dont l'aube est constituée, sont tirées par usinage d'un demi-produit de telle façon que la zone de liaison se trouve au milieu de la paroi longitudinale de séparation de l'aube.

8. Procédé suivant la revendication 5, caractérisé en ce que la pièce à fabriquer est une aube pourvue d'un canal de refroidissement longitudinal, et en ce que les deux parties de pièce, dont l'aube est constituée, sont tirées par usinage d'un demi-produit de telle façon que les zones de liaison soient situées dans un plan et se trouvent à l'endroit des plus faibles sollicitations du profil creux de la lame de l'aube auxquelles on peut s'attendre en service.

# FIG.1

# FIG.2

# FIG.3

# FIG.4

FIG.5

# FIG.6

# FIG. 7

# FIG. 8